(19) Europäisches Patentamt
European Patent Office
Office européen des brevets

(11) Veröffentlichungsnummer: **0 029 111 B1**

# (12) EUROPÄISCHE PATENTSCHRIFT

(45) Veröffentlichungstag der Patentschrift: **12.01.83**

(51) Int. Cl.³: **C 08 G 63/68**

(21) Anmeldenummer: **80106124.3**

(22) Anmeldetag: **09.10.80**

(54) **Thermoplastische aromatische Copolycarbonate, Verfahren zu deren Herstellung aus 2,2-Bis-(4-hydroxyphenyl)-1,1,1,3,3,3,-hexafluorpropan und deren Verwendung.**

(30) Priorität: **22.10.79 US 86891**

(43) Veröffentlichungstag der Anmeldung: **27.05.81 Patentblatt 81/21**

(45) Bekanntmachung des Hinweises auf die Patenterteilung: **12.01.83 Patentblatt 83/2**

(84) Benannte Vertragsstaaten: **DE FR GB IT NL**

(56) Entgegenhaltungen:
**DE-B-1 162 559**
**GB-A-1 141 716**

**W.F. CHRISTOPHER AND D.W. FOX: "Polycarbonates", 1962, Reinhold Publishing Corp., New York, US**

(73) Patentinhaber: **Mobay Chemical Corporation, Penn Lincoln Parkway West, Pittsburgh, Pennsylvania 15205 (US)**

(72) Erfinder: **Krishnan, Sivaram, 159 Faiview Drive, New Martinsville, W. VA 26155 (US)**
Erfinder: **Baron, Arthur L., 211 East Thistle Court, New Martinsville, W. VA 26155 (US)**

(74) Vertreter: **Gremm, Joachim, Dr. et al, Bayer AG c/o Zentralbereich Patente, Marken und Lizenzen, D-5090 Leverkusen 1, Bayerwerk (DE)**

EP 0 029 111 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Thermoplastische aromatische Copolycarbonate, Verfahren zu deren Herstellung aus 2,2-Bis-(4-hydroxyphenyl)-1,1,1,3,3,3-hexafluorpropan und deren Verwendung

Gegenstand der vorliegenden Erfindung sind thermoplastische, aromatische Copolycarbonate aus Diphenolen, dadurch gekennzeichnet, dass 1 bis 10 Gew.-%, vorzugsweise 2 bis 6 Gew.-%, der einkondensierten Gewichtsmenge an Diphenolen, 2,2-Bis-(4-hydroxyphenyl)-1,1,1,3,3,3-hexafluorpropan ist.

Die erfindungsgemässen Copolycarbonate haben mittlere Gewichtsmittelmolekulargewichte $\bar{M}w$ (ermittelt via $\eta_{rel}$ in $CH_2Cl_2$ bei 20°C und 0,5 g/ml) zwischen 10000 und 100000, vorzugsweise zwischen 20000 und 80000. Bekannt sind Homopolycarbonate aus 2,2-Bis-(4-hydroxyphenyl)-1,1,1,3,3,3-hexafluorpropan (siehe: Christopher and Fox, Polycarbonates, Reinhold Publishing Corporation, New York, 1962, Seite 163 sowie das dazu zitierte russische Patent 132403).

Bekannt sind auch Blockcopolycarbonate aus aromatischen Carbonatstruktureinheiten und aliphatischen Polyäther-, Polyester-, Polyurethan- oder Polyolefin-Struktureinheiten, wobei für die aromatischen Carbonatstruktureinheiten auch solche aus fluorierten Diphenolalkanen in Frage kommen können. (Sieh DE-AS 1162559). GB-PS 1141716 beschreibt aromatische Polycarbonate aus fluorierten Diphenolen. Als fluoriertes Diphenol ist u.a. 2,2-Bis-(4'-hydroxyphenyl)-hexafluorpropan in der Patentanschrift aufgeführt.

Aus keiner dieser Literaturstellen waren die erfindungsgemässen Polycarbonate bekannt, aus keiner der Literaturstellen war abzuleiten, dass derartige Polycarbonate eine gute Dimensionsstabilität mit einem guten Fliessverhalten vereinigen, was vor allem wichtig ist für den Einsatz von Polycarbonaten auf dem Automobilsektor, wo einfache Herstellbarkeit der Bauteile wegen des guten Fliessverhaltens und hohe Massgenauigkeit auch bei Dauerbeanspruchung bei erhöhten Temperaturen wegen der guten Dimensionsstabilität erwünscht sind.

Die Herstellung der erfindungsgemässen Copolycarbonate erfolgt nach den üblichen Polycarbonatsherstellungsverfahren (Phasengrenzflächenverfahren, Pyridinverfahren, Umesterungsverfahren) aus den jeweiligen Diphenolen in den jeweils gewünschten Gewichtsverhältnissen.

Gegenstand der vorliegenden Erfindung ist somit auch die Herstellung der erfindungsgemässen Copolycarbonate, die dadurch gekennzeichnet ist, dass man beliebige andere Diphenole zusammen mit 1 bis 10 Gew.-%, vorzugsweise mit 2 bis 6 Gew.-% an 2,2-Bis-(4-hydroxyphenyl)-1,1,1,3,3,3-hexafluorpropan, bezogen jeweils auf einzusetzende Gewichtsmenge an Diphenolen, nach üblichen Polycarbonatherstellungsverfahren polykondensiert.

Gegenstand der vorliegenden Erfindung ist ausserdem die Verwendung der erfindungsgemässen Copolycarbonate zur Herstellung von Formkörpern und Folien.

Beliebige andere Diphenole sind mit dem erfindungsgemäss zu verwendendem 2,2-Bis-(4-hydroxyphenyl)-1,1,1,3,3,3-hexafluorpropan für die Herstellung der erfindungsgemässen Copolycarbonate einsetzbar.

Vorzugsweise sind die anderen Diphenole der folgenden Formel I

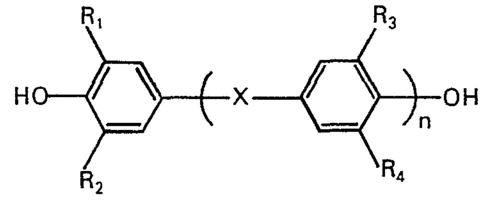

einsetzbar,
worin
$R_1$ bis $R_4$ gleich oder verschieden sind und H, $C_1$–$C_4$-Alkyl, Cl oder Br sein können,
X eine Einfachbindung, -O-, -S-, $-SO_2-$, $C_1$–$C_8$-Alkylen, $C_2$–$C_8$-Alkyliden, Cyclohexylen oder Cyclohexyliden ist und n 0 oder 1 ist.

Besonders bevorzugte andere Diphenole sind solche der Formel I, worin
n = 1 ist.

Geeignete andere Diphenole sind:
Di-(mono-hydroxyaryl)-alkane oder Di-(mono-hydroxyaryxl)-cycloalkane wie beispielsweise Bis-(4-hydroxyphenyl)-methan, 2,2-Bis-(4-hydroxyphenyl)-propan, 1,1-Bis-(4-hydroxyphenyl)-cyclohexan, 1,1-Bis-(4-hydroxy-3-methyl-phenyl)-cyclohexen, 1,1-Bis-(2-hydroxy-4-methyl-phenyl)-butan, 2,2-Bis-(2-hydroxy-4-tert.-butyl-phenyl)-propan, 1,1-Bis-(4-hydroxyphenyl)-1-phenyl-ethan, 2,2-Bis-(4-hydroxyphenyl)-butan, 2,2-Bis-(4-hydroxyphenyl)-pentan (Fp 149–150°C), 3,3-Bis-(4-hydroxyphenyl)-pentan, 2,2-Bis-(4-hydroxyphenyl)-hexan, 3,3-Bis-(4-hydroxyphenyl)-hexan, 2,2-Bis-(4-hydroxyphenyl)-4-methyl-pentan, 2,2-Bis-(4-hydroxpyhenyl)-heptan, 4,4-Bis-(4-hydroxyphenyl)-heptan (Fp 148–149°C), 2,2-Bis-(4-hydroxyphenyl)-tridecan, 2-(4-hydroxy-3-methyl-phenyl)-2-(4-hydroxyphenyl)-propan, 2-(4-hydroxy-3-methyl-phenyl)-2-(4-hydroxy-3-isopropyl)-butan, 2,2-Bis-(3,5-dichlor-4-hydroxyphenyl)-propan, 2,2-Bis-(3,5-dibrom-4-hydroxyphenyl)-propan, Bis-(3-chlor-4-hydroxyphenyl)-methan und Bis-(4-hydroxyphenyl)-phenyl-methan.

Bevorzugtes Verfahren für die Herstellung der erfindungsgemässen Copolycarbonate ist das Zweiphasengrenzflächenverfahren. Gemäss diesem Verfahren werden die Copolycarbonate erhalten, indem man die Diphenole mit Alkalihydroxid oder Erdalkalihydroxid in die Diphenolate überführt und diese in Form ihrer wässrigen Lösungen oder wässrigen Suspensionen mit Phosgen, $COBr_2$ oder Bichlorkohlensäureestern der Diphenole umsetzt. Als organische Phase für die Lösung des sich bildenden Polycarbonats können die üblichen chlorierten aliphatischen Kohlenwasserstoffe oder aromatischen Kohlenwasserstoffe dienen wie beispielsweise $CH_2Cl_2$ oder Chlorbenzol oder deren Mischungen.

Als Kettenregler dienen in bekannter Weise Monophenole wie beispielsweise Phenol, p-tert.-Butyl-phenol oder p-Methyl-phenol oder p-Chlorphenol oder p-Bromphenol.

Als Katalysatoren dienen die üblichen tertiären Amine oder quartären Ammoniumsalze in den bekannten Mengen.

Die Reaktionstemperaturen des Zweiphasengrenzflächenverfahrens können zwischen 0° und etwa 100°C liegen.

Die Herstellung der erfindungsgemässen Copolycarbonate nach dem Verfahren in homogener Lösung (Pyridinverfahren) kann unter Verwendung eines üblicherweise inerten Lösungsmittels für das Polycarbonat und mit den üblichen tertiären Aminen als Säureakzeptoren, wie beispielsweise N,N-Dimethyl-anilin, N,N-Dimethylcyclohexylamine oder vorzugsweise Pyridin erfolgen.

Das Umesterungsverfahren zur Herstellung der erfindungsgemässen Polycarbonate erfolgt in üblicher Weise unter Verwendung von Diarylcarbonat, beispielsweise Diphenylcarbonat nach den üblichen Methoden.

Den erfindungsgemässen Copolycarbonaten können eine Vielzahl von Additiven zugesetzt werden. So können beispielsweise Pigmente zugesetzt werden, um opaque gefärbte Formmassen zu erhalten.

Geeignete Pigmente sind beispielsweise $TiO_2$, Chromgelb, Chromorange oder Chromgrün. Auch öllösliche Farbstoffe können den erfindungsgemässen Polycarbonaten zugemischt werden.

Beispiel

Copolycarbonat aus 2,2-Bis-(4-hydroxyphenyl)-propan (97,5 Gew.-%) und 2,2-Bis-(4-hydroxyphenyl)-hexafluoropropan (2,5 Gew.-%).

Eine wässrige Lösung wird durch simultanes Vermischen von 13,62 kg Bisphenol A (2,2-bis-(4-hydroxyphenyl)-propan), 9,81 kg einer 50%igen wässrigen NaOH-Lösung, 67,22 kg $H_2O$, 280 g p-tert.-Butylphenol und 4 g $NaBH_4$ hergestellt.

34 kg/h dieser Lösung wird kontinuierlich phosgeniert mit 0,24 kg/h Phosgen, gelöst in 50 kg eines 1:1 Methylen/Chlorbenzol-Gemisches.

Sobald 30 Minuten vorbei sind, wird eine Lösung bestehend aus 0,46 kg 2,2-Bis-(4-hydroxyphenyl)-1,1,1,3,3,3-hexafluorpropan, 0,224 kg einer wässrigen NaOH-Lösung und 8,52 kg $H_2O$ mit einer Geschwindigkeit von 2,67 kg/h hinzugegeben. Beginnend mit der Zugabe der Hexafluorpropan-Lösung werden 24,15 kg/h einer 25%igen, wässrigen NaOH-Lösung kontinuierlich zum Reaktionsgemisch hinzugefügt, um die erforderliche Alkalinität der Zweiphasengrenzflächenpolykondensation aufrechtzuerhalten. Das Vorkondensat, das man erhält, wird daraufhin mit einer Lösung von 0,18 kg/h von Triäthylamin und 2,8 kg/h einer 25%igen wässrigen NaOH-Lösung versetzt und über eine Rührkesselkaskade mit einer mittleren Verweilzeit von 30 Minuten reagieren lassen.

Die organische Phase wird dann abgetrennt und mit 1%iger wässriger NaOH-Lösung gewaschen, wieder abgetrennt und danach mit 1%iger Phosphorsäurelösung gewaschen.

Danach wird die abgetrennte organische Phase noch dreimal mit Wasser gewaschen. Das Polycarbonat wird dann in üblicher Weise isoliert durch Verdampfen des Lösungsmittels und anschliessende Extrusion im Ausdampfextruder. Das erhaltene Polycarbonat wird granuliert und den nachfolgenden Tests gemäss Tabelle 1 unterzogen.

Tabelle 1

| | Copolycarbonat aus 2,2-Bis-(4-hydroxyphenyl)-propan (97,5 Gew.-%) und 2,2-Bis-(4-hydroxyphenyl)-hexafluorpropan (2,5 Gew.-%) | Homopolycarbonate aus 2,2-Bis-(4-hydroxyphenyl)-propan |
|---|---|---|
| Schmelzindex g/10 Min (ASTM 1238) | 8,6 | 3,6 |
| Wärmeformbeständigkeit bei 1820 kPam °C (ASTM D 648) | 141°C | 131°C |
| Optische Eigenschaften | | |
| % Helligkeit | | |
| bei 288°C Verarbeitung | 86,98 | 85,96 |
| bei 371°C Verarbeitung | 86,41 | 85,74 |
| % Gelbfärbung | | |
| bei 288°C Verarbeitung | 6,8 | 7,2 |
| bei 372°C Verarbeitung | 8,0 | 8,0 |
| Schmelzstabilität bei 300°C | | |
| 5 Min., Schmelzviskosität PaS | 580 | 2445 |
| 35 Min., Schmelzviskosität PaS | 665 | 3020 |
| 55 Min., Schmelzviskosität PaS | 680 | 3050 |
| Zähigkeitseigenschaften | | |
| Izod-Kerbschlagzähigkeit (J/m), 3,2 mm Prüfstab | 836,46 | - |
| 6,4 mm Prüfstab | 129,71 | - |

Tabelle 1 (Fortsetzung)

| | Copolycarbonat aus 2,2-Bis-(4-hydroxyphenyl)-propan (97,5 Gew.-%) und 2,2-Bis-(4-hydroxyphenyl)-hexafluorpropan (2,5 Gew.-%) | Homopolycarbonate aus 2,2-Bis-(4-hydroxyphenyl)-propan |
|---|---|---|
| (ASTM D-256) | | |
| Kritische Dicke in mm | 4,75 | - |
| Zugfestigkeit an der Streckgrenze in MPa (ASTM D-638) | 62,0 | - |
| Zugfestigkeit beim Bruch in MPa (ASTM D-638) | 62,12 | - |
| Zugfestigkeitsverfall in MPa | 63,43 | - |
| Biegeeigenschaften | | |
| Biegemodul in MPa (ASTM D-790) | 2,07 | - |
| Biegefestigkeit an der Streckgrenze in MPa | 84,9 | - |
| Biegefestigkeit beim Bruch in MPa | 84,9 | - |
| UL - 94 bei 3,2 mm Prüfstab | V - 2 | - |

Die Vergleichswerte in Tabelle 1 zeigen, dass die Cokondensation von wenig 2,2-Bis-(4-hydroxyphenyl)-hexafluorpropan die Wärmeformbeständigkeit verbessert, während gleichzeitig der Schmelzindex wesentlich höher liegt.

Darüberhinaus lassen sich die erfindungsgemässen Copolycarbonate leicht verarbeiten ohne Verlust ihrer Wärmeformbeständigkeit. Darüberhinaus belegen die Werte die optischen Eigenschaften sowie der Schmelzstabilität, dass die erfindungsgemässen Copolycarbonate bei erhöhten Temperaturen ohne nennenswerten Abbau verarbeitet werden können.

Den erfindungsgemässen Copolycarbonaten können noch die in der Polycarbonatchemie üblichen Stabilisatoren beispielsweise gegen Hitze und Lichteinwirkung und Füllstoffe, beispielsweise Glasfasern, zugesetzt werden.

Die erfindungsgemässen Copolycarbonate können ausserdem mit anderen Thermoplasten, beispielsweise mit anderen thermoplastischen Polycarbonaten oder mit ABS-Polymerisaten abgemischt werden.

Die erfindungsgemässen Copolycarbonate können zu Formkörper und Folien in bekannter Weise verarbeitet werden.

Die technische Verwendung der erfindungsgemässen Copolycarbonate als Formkörper und Folien entspricht der bisherigen technischen Verwendung der bekannten thermoplastischen Polycarbonate auf Basis von 2,2-Bis-(4-hydroxyphenyl)-propan.

## Patentansprüche

1. Thermoplastische, aromatische Copolycarbonate aus Diphenolen, dadurch gekennzeichnet, dass 1 Gew.-% bis 10 Gew.-% der einkondensierten Gewichtsmenge an Diphenolen, 2,2-Bis-(4-hydroxyphenyl)-1,1,1,3,3,3-hexafluorpropan ist.

2. Copolycarbonate gemäss Anspruch 1, dadurch gekennzeichnet, dass 2 bis 6 Gew.-% der einkondensierten Gewichtsmenge an Diphenolen, 2,2-Bis-(4-hydroxyphenyl)-1,1,1,3,3,3-hexafluorpropan ist.

3. Verfahren zur Herstellung der Copolycarbonate des Anspruchs 1, dadurch gekennzeichnet, dass man beliebige andere Diphenole zusammen mit 1 bis 10 Gew.-% an 2,2-Bis-(4-hydroxyphenyl)-1,1,1,3,3,3-hexafluorpropan, bezogen auf jeweils einzusetzende Gewichtsmenge an Diphenolen, nach üblichen Polycarbonatherstellungsverfahren polykondensiert.

4. Verfahren zur Herstellung der Copolycarbonate des Anspruchs 2, dadurch gekennzeichnet, dass man beliebige andere Diphenole zusammen mit 2 bis 6 Gew.-% an 2,2-Bis-(4-hydroxyphenyl)-1,1,1,3,3,3-hexafluorpropan, bezogen jeweils auf einzusetzende Gewichtsmenge an Diphenolen, nach üblichen Polycarbonatherstellungsverfahren polykondensiert.

5. Verwendung der Copolycarbonate der Ansprüche 1 und 2 zur Herstellung von Formkörpern und Folien.

## Claims

1. Thermoplastic, aromatic copolycarbonates obtained from diphenols, characterised in that 1% by weight to 10% by weight of the co-condensed quantity by weight of diphenols is 2,2-bis-(4-hydroxyphenyl)-1,1,1,3,3,3-hexafluoropropane.

2. Copolycarbonates according to Claim 1, characterised in that 2 to 6% by weight of the co-condensed quantity by weight of diphenols is 2,2-bis-(4-hydroxyphenyl)-1,1,1,3,3,3-hexafluoropropane.

3. Process for the preparation of the copolycarbonates of Claim 1, characterised in that any other diphenols are polycondensed by customary polycarbonate production processes together with 1 to 10% by weight of 2,2-bis-(4-hydroxyphenyl)-1,1,1,3,3,3-hexafluoropropane, based on the

quantity by weight of diphenols to be used in each case.

4. Process for the preparation of the copolycarbonates of Claim 2, characterised in that any other diphenols are polycondensed by customary polycarbonate production processes together with 2 to 6% by weight of 2,2-bis-(4-hydroxyphenyl)-1,1,1,3,3,3-hexafluoropropane, based in each case on the quantity by weight of diphenols to be used.

5. Use of the copolycarbonates of Claims 1 and 2 for the production of moulded articles and films.

## Revendications

1. Copolycarbonates aromatiques thermoplastiques de diphénols, caractérisés en ce que 1% en poids à 10% en poids de la quantité en poids de diphénols condensée consistent en 2,2-bis-(4-hydroxyphényl)-1,1,1,3,3,3-hexafluoropropane.

2. Copolycarbonates selon la revendication 1, caractérisés en ce que 2 à 6% en poids de la quantité en poids de diphénols condensée consistent en 2,2-bis-(4-hydroxyphényl)-1,1,1,3,3,3-hexafluoropropane.

3. Procédé de préparation des copolycarbonates de la revendication 1, caractérisé en ce que l'on polycondense par des techniques usuelles de préparation des polycarbonates d'autres diphénols quelconques avec 1 à 10% en poids de 2,2-bis-(4-hydroxyphényl)-1,1,1,3,3,3-hexafluoropropane, dans les deux cas par rapport à la quantité en poids de diphénols à mettre en œuvre.

4. Procédé de préparation des copolycarbonates de la revendication 2, caractérisé en ce que l'on polycondense par des techniques usuelles de préparation des polycarbonates d'autres diphénols quelconques avec 2 à 6% en poids de 2,2-bis-(4-hydroxyphényl)-1,1,1,3,3,3-hexafluoropropane, dans les deux cas par rapport à la quantité en poids de diphénols à mettre en œuvre.

5. Utilisation des copolycarbonates des revendications 1 et 2 dans la préparation d'objets moulés et de feuilles.